# EUROPEAN PATENT APPLICATION

(11) **EP 4 159 614 A1**
(43) Date of publication of application: **05.04.2023**
(21) Application number: 21200357.8
(22) Date of filing: 30.09.2021
(51) Int. Cl.: B64C 9/22, B64C 3/50, B64C 9/02

(54) **A HINGE ARM DEVICE FOR A HIGH LIFT ASSEMBLY OF AN AIRCRAFT**

(71) Applicant: Airbus Operations GmbH, 21129 Hamburg (DE)
(72) Inventor: Bensmann, Stefan, 21129 Hamburg (DE)
(74) Representative: Bird & Bird LLP

(57) **Abstract**

Disclosed is a hinge arm device (17) for a hinged connection of a high lift body (15) to a main wing (11) of a wing (5) for an aircraft (1), the hinge arm device (17) comprising a beam-shaped main load bearing arm structure (21) extending between a first end (29) and an opposite second end (31), and configured for connecting the high lift body (15) to the main wing (11), a connection device (23) mounted to or integrally formed with the first end (29) of the arm structure (21), and configured for connecting the arm structure (21) to the high lift body (15), and a hinge device (25) mounted to or integrally formed with the second end (31) of the arm structure (21), and configured for pivotably connecting the arm structure (21) to the main wing (11). The object to provide an efficient fail-safe hinge arm device, is achieved in that the arm structure (21) comprises a first arm member (35) and a second arm member (37) formed separately from one another, wherein each of the first arm member (35) and the second arm member (37) is mounted to or integrally formed with both the connection device (23) and the hinge device (25), so that each of the first arm member (35) and the second arm member (37) forms an individual main load path.

## Description

The present invention relates to a hinge arm device for a hinged connection of a high lift body, in particular a droop nose, to a main wing of a wing for an aircraft. Further aspects of the invention relate to a high lift assembly comprising such a hinge arm device, a wing comprising such a high lift device, and an aircraft comprising such a hinge arm device, such a high lift assembly and/or such a wing.

The hinge arm device comprises a beam-shaped main load bearing arm structure, a connection device, and a hinge device. The arm structure extends in an elongate manner along a longitudinal axis between a first end and an opposite second end. Further, the arm structure is configured for pivotably connecting the high lift body to the main wing. The connection device is mounted to, preferably fixedly mounted to, or integrally formed with the first end of the arm structure. Further, the connection device is configured for fixedly or pivotably connecting the arm structure to the high lift body. The hinge device is mounted to, preferably fixedly mounted to, or integrally formed with the second end of the arm structure. The hinge device is configured for pivotably connecting the arm structure to the main wing, preferably to a load introduction rib of the main wing, for movement of the hinge arm device about a hinge axis. The hinge arm device might also be coupled to a drive unit, e.g. in the form of a drive arm, drive linkage or hub drive, for rotatingly driving the hinge arm device about the hinge axis.

Similar hinge arm devices are known in the art, for example as part of a leading edge high lift assembly to connect a droop leading edge high lift body, also referred to as droop nose, to the main wing in a pivotable manner, so that the high lift body can be pivoted from a stowed position downwards to a deployed position to increase the curvature of the wing. In known aircraft such droop nose high lift assemblies are used at an inboard position of the wing where three hinge arm device are employed to support one high lift body. If droop nose high lift assemblies would be used also at an outboard position of the wing, space constraints would likely allow only two hinge arm devices per high lift body. This means, however, that each of the two hinge arm devices used must be fails-safe per se in order to meet the fail-safety requirements of the high lift assembly and the wing.

Therefore, the object of the present invention is to provide an efficient fail-safe hinge arm device.

This object is achieved in that the arm structure comprises a first arm member and a second arm member formed separately from one another. Each of the first arm member and the second arm member is mounted to, preferably fixedly mounted to, or integrally formed with both the connection device and the hinge device, so that each of the first arm member and the second arm member forms an individual main load path between the connection device and the hinge device to achieve redundant main load paths. Preferably, this includes that not only the arm structure but also the connection device and the hinge device are formed fail-safe with each having two individual main load paths. This is preferably realized by the first and second arm members extending through or forming part of the connection device and/or the hinge device. In such a way, a fail-safe hinge arm device is formed. With such a fail-safe hinge arm device it is possible to provide a fail-safe connection of a droop nose high lift body to a main wing using only two hinge arm devices. This in turn allows to a droop nose formed high lift body also at an outboard position of the wing where only two hinge arm devices can be reasonably installed.

According to a preferred embodiment, the first arm member is connected to the second arm member along a longitudinal axis of the arm structure, preferably continuously or repetitively, e.g. by a row of screws, rivets, or bolts subsequently arranged along the longitudinal axis. In such a way, the first and second arm members support each other and when one of the first and second arm members fails at some location, this location can be bridged by the other one of first and second arm members.

According to a further preferred embodiment, the connection device comprises at least one lug configured for being connected to the high lift body. Preferably, the connection device comprises a first lug and a second lug. The first lug is configured to be directly connected to the high lift body, preferably by a bolt extending through the first lug and also extending through a further lug of the high lift body, preferably provided in a rib of the high lift body. The second lug is configured to be connected to the high lift body preferably via a link spaced apart from the first lug, so that relative rotation of the high lift body and the hinge arm device is inhibited by the link. Preferably, the second lug is configured to be connected to the link by a bolt extending through the second lug and also extending through a bore at one end of the link, wherein the link in turn is connected at its opposite end to the high lift body, preferably to a rib of the high lift body, by a bolt extending through another bore at the opposite end of the link and extending through another lug provided at the rib of the high lift body. By this connection via the first and second lugs and the link the high lift body is connected to the hinge arm device in a rotationally fixed manner. However, it is also possible the connection of the connection device to the high lift body does not make use of a link, so that the first and second lugs are directly connected to the high lift body. Preferably, the first arm member and/or the second arm member extend all the way to the first and/or second lugs, preferably forming the structure surrounding the first and/or second lugs, so that the entire hinge arm device including the first and/or second lug is fail-safe. Such first and second lugs are a simple and reliable way of connecting the hinge arm device to the high lift body.

According to a further preferred embodiment, the hinge device comprises a hinge lug configured for a hinged connection to the main wing, preferably to a load introduction rib of the main wing, preferably by a hinge bolt engaging the hinge lug and mounted to or engaged with the main wing, preferably with the rib of the main wing. Preferably, the first arm member and/or the second arm member extend all the way to the hinge lug, preferably forming the structure surrounding the hinge lug, so that the entire hinge arm device including the hinge lug is fail-safe. Such a hinge lug is a simple and reliable way to form a hinged connection of the hinge arm device to the main wing.

According to a further preferred embodiment, the first arm member has a cross section, preferably a C-, I-, double T-shaped cross section, including a first upper flange portion, a first lower flange portion and a first web portion connecting the first upper and lower flange portions. The first arm member is preferably arranged such that the first upper and lower flange portions are arranged essentially horizontally while the first web portion is arranged essentially vertically, when the corresponding aircraft is in a normal position on ground. Such a cross section relates to an efficient lightweight structure where the first upper and lower flange portions transfer the bending moments caused by air loads and first web portion transfers the shear loads.

In particular, it is preferred that the second arm member has a cross section, preferably a C-, I-, double T-shaped cross section, including a second upper flange portion, a second lower flange portion and a second web portion connecting the second upper and lower flange portions. The second arm member is preferably arranged such that the first and second upper and lower flange portions are arranged in parallel to one another and are preferably arranged essentially horizontally while the first and second web portions are arranged in parallel to one another and are preferably arranged essentially vertically, when the corresponding aircraft is in a normal position on ground. Such a cross section relates to an efficient lightweight structure where the second upper and lower flange portions transfer the bending moments caused by air loads and second web portion transfers the shear loads.

It is further preferred that the first arm member and the second arm member have a C-shaped cross section, wherein the first web portion preferably rests against the second web portion, preferably in a symmetric manner. In such a way, the first and second arm members together form a double c-shaped or split I-shaped profile with two independent main load paths, which is a very lightweight and strong profile.

According to a preferred embodiment, the arm structure comprises a third arm member that is formed separately from the first arm member and the second arm member and that is mounted to, preferably fixedly mounted to, or integrally formed with both the connection device and the hinge device, so that the third arm member forms an individual main load path. Preferably, the third arm member is connected to the first arm member and/or to the second arm member along the longitudinal axis of the arm structure. The third arm member preferably extends all the way to the hinge lug forming the structure surrounding the hinge lug and/or extends all the way to the first and/or second lug forming the structure surrounding the first and/or second lug. By the third arm member a third main load path is formed, thereby further improving fail-safety of the hinge arm device.

In particular, it is preferred that the first arm member and the second arm member have a C-shaped cross section. Preferably, the first web portion of the first arm member and the second web portion of the second arm member rest against the third arm member from opposite sides, so that the first arm member and the second arm member are connected to one another via the third arm member. Preferably, the third arm member has an elongate, square- or strip-shaped cross section having a first surface resting against the first web portion and an opposite second surface resting against the second web portion, preferably in a symmetric manner. This relates to a very efficient arrangement of the first, second and third arm members.

According to an alternative embodiment, the second arm member rests against an upper surface of the first upper flange portion or against a lower surface of the first lower flange portion. Preferably, the first arm member has an I- or double T-shaped cross section, and the second arm member has a square- or strip-shaped cross section. This relates to a very efficient arrangement where only the first and second arm members are required. However, it is also possible that a third arm member rests against the respective upper surface of the first upper flange portion or against a lower surface of the first lower flange portion, opposite from the second arm member, i.e. the one that is not resting against the second arm member.

According to another alternative embodiment, the first arm member has an I-shaped cross section or a double T-shaped cross section. Preferably, the second arm member rests against a first side of the first web portion. The second arm member preferably has a square- or strip-shaped cross section and is arranged within the recess formed between the first upper flange portion, the first lower flange portion, and the first side of the first web portion. Alternatively, the second arm member has an L-shaped cross section including a first leg resting against the first side of the first web portion, and a second leg resting against the lower side of the first upper flange portion or against the upper side of the first lower flange portion. Additionally or alternatively, it is preferred that the third arm member rests against a second side of the first web portion opposite the first side. The third arm member preferably has a square- or strip-shaped cross section and is arranged within the recess formed between the first upper flange portion, the first lower flange portion, and the second side of the first web portion. Alternatively, the third arm member has an L-shaped cross section including a first leg resting against the second side of the first web portion, and a second leg resting against the lower side of the second upper flange portion or against the upper side of the second lower flange portion. This relates to another very efficient arrangement of the first, second and/or third arm members.

According to another alternative embodiment, the first arm member has a cross section, preferably a T-shaped cross section, including a first web portion and a first flange portion arranged at the upper or lower end of the web portion. The arm structure is preferably arranged such that the first flange portion is arranged horizontally while the first web portion is arranged vertically, when the corresponding aircraft is in a normal position on ground. Preferably, the second arm member rests against a first side of the web portion at the respective lower or upper end of the web portion opposite from the first flange portion, i.e. the free end of the web portion. The second arm member preferably has an L-shaped cross section including a first leg resting against the first side of the web portion and a second leg extending away from the web portion. Additionally or alternatively, the third arm member rests against a second side of the web portion at the respective lower or upper end of the web portion opposite from the first flange portion, i.e. the free end of the web portion. The third arm member preferably has an L-shaped cross section including a first leg resting against the second side of the web portion and a second leg extending away from the web portion. This relates to another very efficient arrangement of the first, second and/or third arm members.

A further aspect of the present invention relates to a high lift assembly, preferably a leading edge high lift assembly, comprising a high lift body, and the hinge arm device according to any of the embodiments described above, wherein the high lift body is connected to the connection device of the hinge arm device. The high lift body preferably is a leading edge high lift body, preferably a droop high lift body, also referred to as a droop nose, which is hinged at the main wing via the hinge arm device and which is pivotable relative to the main wing about a hinge axis at the main wing between a stowed position and a deployed position. The features and effects described above in connection with the hinge arm device apply vis-à-vis also in case of the high lift assembly.

A further aspect of the present invention relates to a wing for an aircraft, comprising the high lift assembly according to any of the embodiments described above, and a main wing. The hinge device of the hinge arm device of the high lift assembly is connected to the main wing, such that the high lift body is pivotable about a hinge axis relative to the main wing by the hinge arm device between a stowed position and a deployed position. The features and effects described above in connection with the high lift assembly apply vis-à-vis also in case of the wing.

A further aspect of the present invention relates to an aircraft comprising the hinge arm device according to any of the embodiments described above, the high lift assembly according to any of the embodiments described above, and/or the wing according to any of the embodiments described above. The features and effects described above in connection with the hinge arm device, the high lift assembly, and the wing apply vis-à-vis also in case of the aircraft.

Preferred embodiments of the present invention are described in the following in more detail by means of a drawing. The drawing shows in
- Fig. 1: a perspective view of an aircraft according to an embodiment of the invention,

- Fig. 2: a cross-sectional view across the span direction of a wing according to an embodiment of the invention,
- Fig. 3: a cross-sectional view across a longitudinal axis of an arm structure of a hinge arm device according to the prior art,
- Fig. 4: a cross-sectional view across a longitudinal axis of an arm structure of a hinge arm device according to an embodiment of the invention,
- Fig. 5: a top view of the hinge arm device shown in Fig. 4,
- Fig. 6: a cross-sectional view across a longitudinal axis of an arm structure of a hinge arm device according to a further embodiment of the invention,
- Fig. 7: a top view of the hinge arm device shown in Fig. 6,
- Fig. 8: a cross-sectional view across a longitudinal axis of an arm structure of a hinge arm device according to a further embodiment of the invention,
- Fig. 9: a top view of the hinge arm device shown in Fig. 8,
- Fig. 10: a cross-sectional view across a longitudinal axis of an arm structure of a hinge arm device according to a further embodiment of the invention,
- Fig. 11: a cross-sectional view across a longitudinal axis of an arm structure of a hinge arm device according to a further embodiment of the invention, and
- Fig. 12: a cross-sectional view across a longitudinal axis of an arm structure of a hinge arm device according to a further embodiment of the invention.

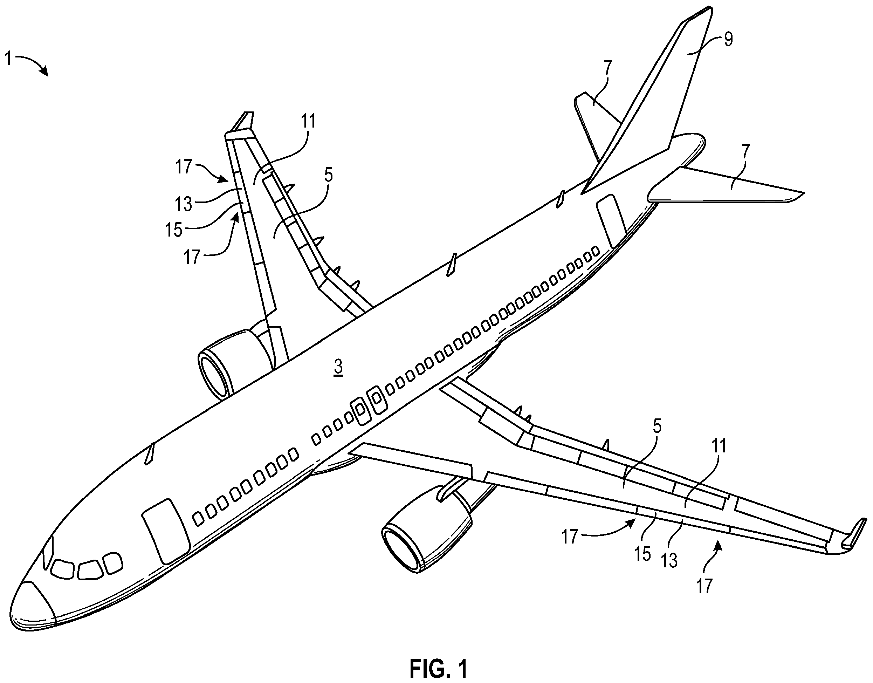

In Fig. 1 an embodiment of an aircraft 1 according to the invention is shown. The aircraft 1 comprises a fuselage 3, wings 5, a horizontal tail plane 7 and a vertical tail plane 9.

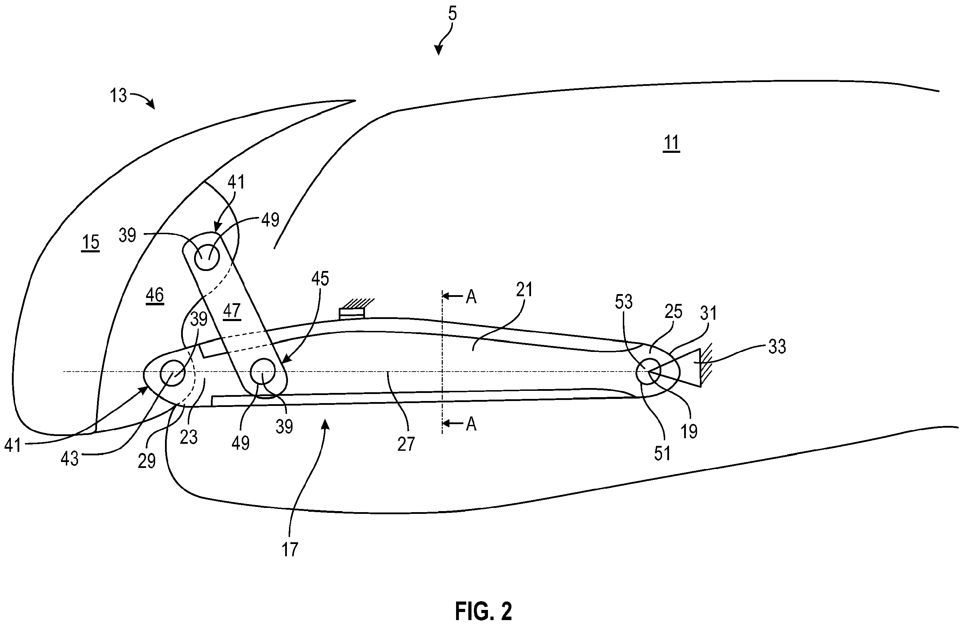

Each wing 5 is formed as shown in Fig. 2 comprising a main wing 11 and a high lift assembly 13 in the form of a leading edge droop nose assembly, hinged to the main wing 11. The high lift assembly 13 comprises a high lift body 15, in the present embodiment a droop nose, and a hinge arm device 17 for hinged coupling of the high lift body 15 to the main wing 11, such that the high lift body 15 is pivotable relative to the main wing 11 about a hinge axis 19 between a stowed position and a deployed position.

The hinge arm device 17 comprises a beam-shaped main load bearing arm structure 21, a connection device 23, and a hinge device 25. The arm structure 21 extends in an elongate manner along a longitudinal axis 27 between a first end 29 and an opposite second end 31. Further, the arm structure 21 is configured for pivotably connecting the high lift body 15 to the main wing 11. The connection device 23 is fixedly mounted to or integrally formed with the first end 29 of the arm structure 21. Further, the connection device 23 is configured for fixedly connecting the arm structure 21 to the high lift body 15. The hinge device 25 is integrally formed with the second end 31 of the arm structure 21. The hinge device 25 is configured for pivotably connecting the arm structure 21 to a load introduction rib 33 of the main wing 11 for movement of the hinge arm device 17 about a hinge axis 19.

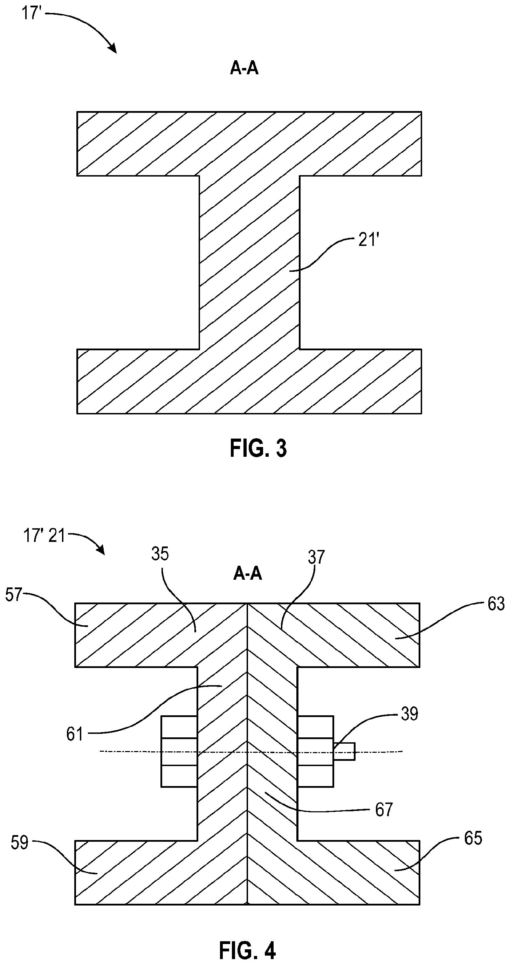

Fig. 3 shows the cross section of an arm structure 21' of a prior art hinge arm device 17'. The arm structure 21' has a I-shaped profiled and forms only a single main load path.

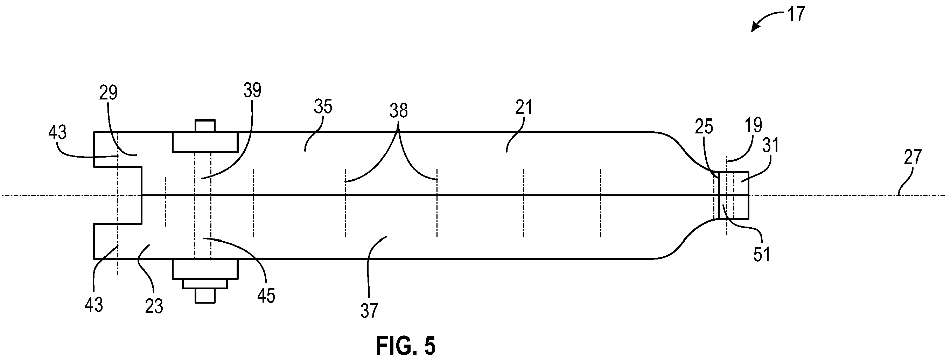

Figs. 4 to 12 show various embodiments of hinge arm devices 17 according to the invention. The arm structure 21 of the hinge arm devices 17 according to the invention comprises a first arm member 35 and a second arm member 37 formed separately from one another. Each of the first arm member 35 and the second arm member 37 is integrally formed with both the connection device 23 and the hinge device 25, so that each of the first arm member 35 and the second arm member 37 forms an individual main load path between the connection device 23 and the hinge device 25 to achieve redundant main load paths. This includes that not only the arm structure 21 but also the connection device 23 and the hinge device 25 are formed fail-safe with each having two individual main load paths. In the embodiment shown in Figs. 4 and 5, this is realized by the first and second arm members 35, 37 extending through or forming part of the connection device 23 and the hinge device 25.

As shown in Figs. 5, 7 and 9, the first arm member 35 is connected to the second arm member 37 along a longitudinal axis 27 of the arm structure 21 by a row of screws 38 subsequently arranged along the longitudinal axis 27. In the embodiments shown in Figs. 5, 7 and 9 the

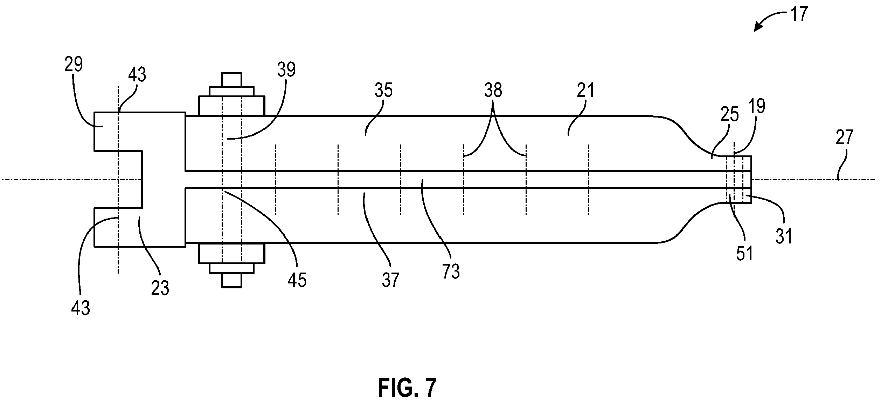

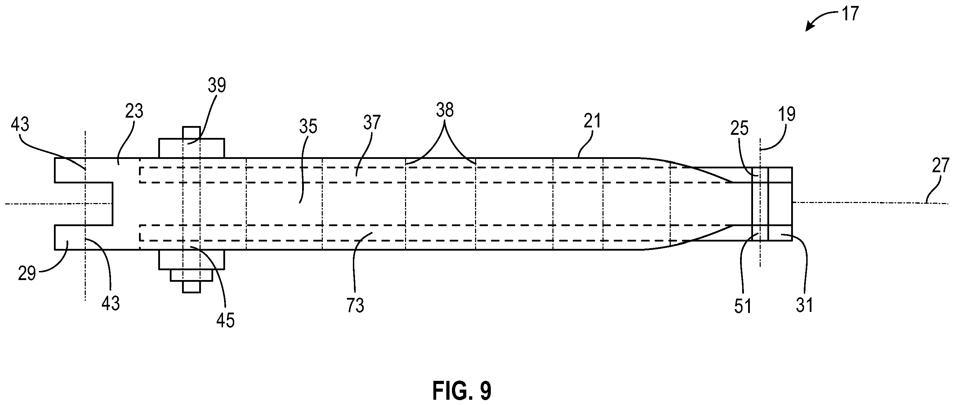

As shown in Figs. 2, 5, 7, and 9, the connection device 23 comprises a first lug 43 and a second lug 45 configured for being connected to the high lift body 15. The first lug 43 is configured to be directly connected to the high lift body 15 by a bolt 39 extending through the first lug 43 and also extending through a further lug 41 of the high lift body 15 provided in a rib 46 of the high lift body 15. The second lug 45 is configured to be connected to the high lift body 15 via a link 47 spaced apart from the first lug 43, so that relative rotation of the high lift body 15 and the hinge arm device 17 is inhibited by the link 47. The second lug 45 is configured to be connected to the link 47 by a bolt 39 extending through the second lug 45 and also extending through a bore 49 at one end of the link 47, wherein the link 47 in turn is connected at its opposite end to the rib 46 of the high lift body 15 by a bolt 39 extending through another bore 49 at the opposite end of the link 47 and extending through another lug 41 provided in the rib 46 of the high lift body 15. By this connection via the first and second lugs 43, 45 and the link 47 the high lift body 15 is connected to the hinge arm device 17 in a rotationally fixed manner. In the embodiment shown in Fig. 5, the first arm member 35 and the second arm member 37 extend all the way to the first and second lugs 43, 45forming the structure surrounding the first and second lugs 43, 45, so that the entire hinge arm device 17 including the first and second lugs 43, 45, is fail-safe. In the embodiment shown in Figs. 7 and 9, only the first arm member 35 extends up to both first and second lugs 43, 45, while the second arm member 37 extends only up to the second lug 45 but not further to the first lug 43.

As also shown in Figs. 2, 5, 7, and 9, the hinge device 25 comprises a hinge lug 51 configured for a hinged connection to a load introduction rib 33 of the main wing 11 by a hinge bolt 53 engaging the hinge lug 51 and mounted to the rib 33 of the main wing 11. The first arm member 35 and the second arm member 37 extend all the way to the hinge lug 51, forming the structure surrounding the hinge lug 51, so that the entire hinge arm device 17 including the hinge lug 51 is fail-safe. In the embodiments shown in Figs. 5, 7 and 9 the first lug 43 is formed as a female lug and the hinge lug 51 is formed as a male lug. However, it is also possible that the first lug 43 is formed as a male lug and/or the hinge lug 51 is formed as a female lug.

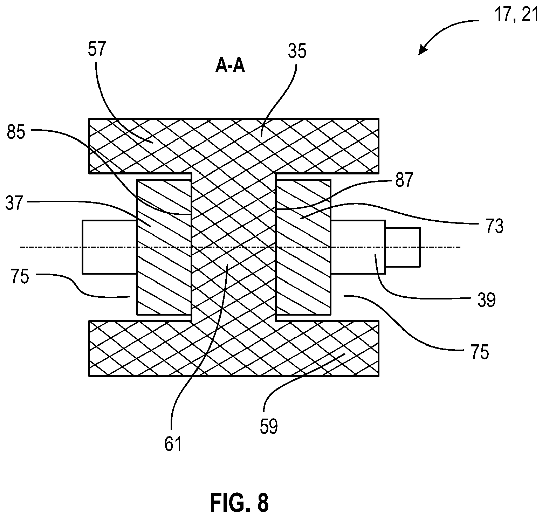

In the embodiments shown in Figs. 4 to 11, the first arm member 35 has a cross section including a first upper flange portion 57, a first lower flange portion 59 and a first web portion 61 connecting the first upper and lower flange portions 57, 59. In the embodiments shown in Fig. 4 to 7 the first arm member 35 has a C-shaped cross section and in the embodiments shown in Figs. 8 to 11 the first arm member 35 has an I -shaped cross section. The first arm member 35 is arranged such that the first upper and lower flange portions 57, 59 are arranged essentially horizontally while the first web portion 61 is arranged essentially vertically, when the corresponding aircraft 1 is in a normal position on ground.

In the embodiments shown in Figs. 4 to 7, the second arm member 37 has a C -shaped cross section including a second upper flange portion 63, a second lower flange portion 65 and a second web portion 67 connecting the second upper and lower flange portions 63 ,65. The second arm member 37 is arranged such that the first and second upper and lower flange portions 57, 59, 63, 65 are arranged in parallel to one another and are arranged essentially horizontally while the first and second web portions 61, 67 are arranged in parallel to one another and are arranged essentially vertically, when the corresponding aircraft 1 is in a normal position on ground.

In the embodiment shown in Figs. 4 and 5, the first arm member 35 and the second arm member 37 have a C-shaped cross section, wherein the first web portion 61 rests against the second web portion 67 in a symmetric manner.

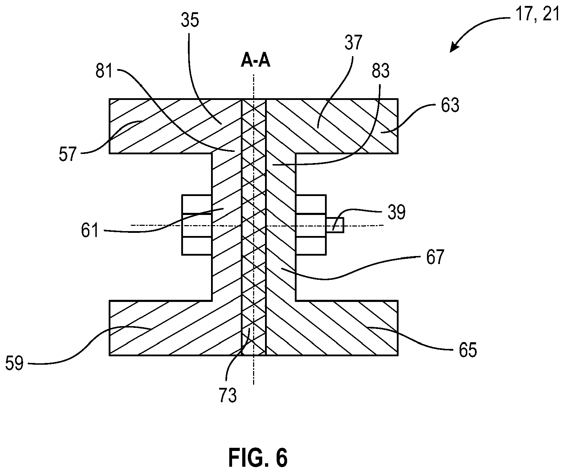

In the embodiment shown in Figs. 6 to 9, 11 and 12, the arm structure 21 comprises a third arm member 73 that is formed separately from the first arm member 35 and the second arm member 37 and that is fixedly mounted to or integrally formed with the connection device 23 and integrally formed with the hinge device 25, so that the third arm member 73 forms an individual main load path. The third arm member 73 is connected to the first arm member 35 and/or to the second arm member 37 along the longitudinal axis 27 of the arm structure 21. The third arm member 73 extends all the way to the hinge lug 51 forming the structure surrounding the hinge lug 51, and in the embodiment shown in Figs. 4 and 5 extends all the way to the first and second lug 43, 45 forming the structure surrounding the first and/or second lug 43, 45, while in the embodiment shown in Figs. 6 to 9 extends only up to the second lug 45 forming the structure surrounding the second lug 45, but not to the first lug 43.

In the embodiment shown in Figs. 6 and 7, the first arm member 35 and the second arm member 37 have a C-shaped cross section. The first web portion 61 of the first arm member 35 and the second web portion 67 of the second arm member 37 rest against the third arm member 73 from opposite sides, so that the first arm member 35 and the second arm member 37 are connected to one another via the third arm member 73. The third arm member 73 has an elongate, square-shaped cross section having a first surface 81 resting against the first web portion 61 and an opposite second surface 83 resting against the second web portion 67 in a symmetric manner.

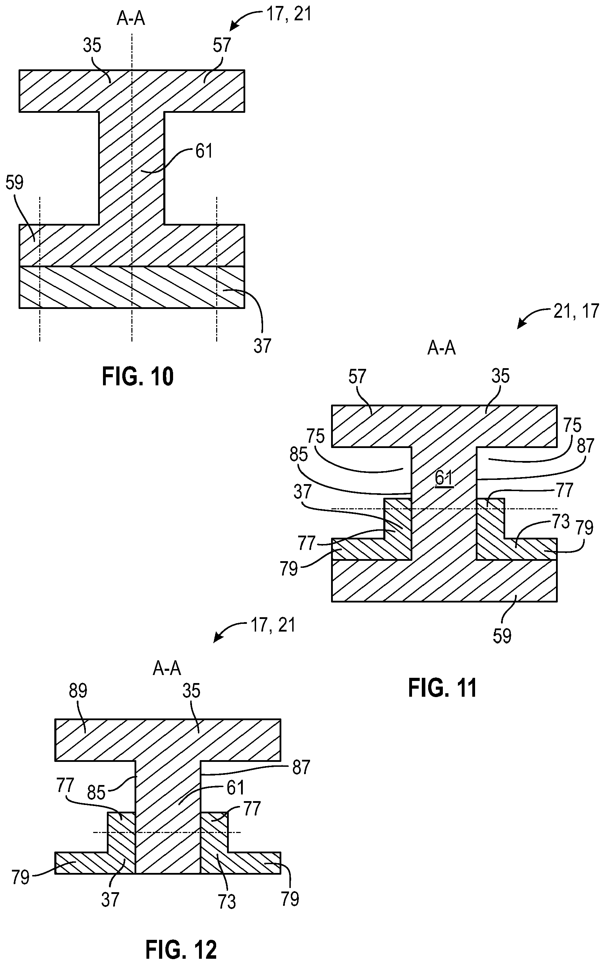

In the embodiment shown in Fig. 10, the first arm member 35 has an I-shaped cross section and the second arm member 37 has a square-shaped cross section. The second arm member 37 rests against a lower surface of the first lower flange portion 59 of the first arm member 35.

In the embodiments shown in Figs. 8, 9 and 11, the first arm member 35 has an I-shaped cross section. The second arm member 37 rests against a first side 85 of the first web portion 61 and the third arm member 73 rests against a second side 87 of the first web portion 61 of the first arm member 35, opposite the first side 85.

In the embodiment shown in Figs. 8 and 9, the second arm member 37 has a square-shaped cross section and is arranged within the recess 75 formed between the first upper flange portion 57, the first lower flange portion 59, and the first side 85 of the first web portion 61. Likewise, the third arm member 73 has a square-shaped cross section and is arranged within the recess 75 formed between the first upper flange portion 57, the first lower flange portion 59, and the second side 87 of the first web portion 61.

In the embodiment shown in Fig. 11, the second arm member 37 has an L-shaped cross section including a first leg 77 resting against the first side 85 of the first web portion 61, and a second leg 79 resting against the upper side of the first lower flange portion 59. The third arm member 73 has an L-shaped cross section including a first leg 77 resting against the second side 87 of the first web portion 61, and a second leg 79 resting against the upper side of the second lower flange portion 65.

In the embodiment shown in Fig. 12, the first arm member has a T-shaped cross section including a first web portion 61 and a first flange portion 89 arranged at the upper end of the first web portion 61. The arm structure 21 is arranged such that the first flange portion 89 is arranged essentially horizontally while the first web portion 61 is arranged essentially vertically, when the corresponding aircraft 1 is in a normal position on ground. The second arm member 37 rests against a first side 85 of the first web portion 61 at the lower end of the first web portion 21 opposite from the first flange portion 89, i.e. the free end of the first web portion 61. The second arm member 37 has an L-shaped cross section including a first leg 77 resting against the first side 85 of the first web portion 61 and a second leg 79 extending away from the first web portion 61. Likewise, the third arm member 73 rests against a second side 87 of the first web portion 61 at the lower end of the first web portion 61 opposite from the first flange portion 89, i.e. the free end of the first web portion 61. The third arm member 73 has an L-shaped cross section including a first leg 77 resting against the second side 87 of the first web portion 61 and a second leg 79 extending away from the first web portion 61 opposite from the second leg 79 of the second arm member 37.

By the present invention as described before, a fail-safe hinge arm device 17 is formed. With such a fail-safe hinge arm device 17 it is possible to provide a fail-safe connection of a droop nose formed high lift body 15 to a main wing 11 using only two hinge arm devices 17. This in turn allows to employ a droop nose formed high lift body 15 also at an outboard position of the wing 5 where only two hinge arm devices 17 can be advantageously installed.

## Claims

1. A hinge arm device (17) for a hinged connection of a high lift body (15) to a main wing (11) of a wing (5) for an aircraft (1), the hinge arm device (17) comprising
a beam-shaped main load bearing arm structure (21) extending between a first end (29) and an opposite second end (31), and configured for connecting the high lift body (15) to the main wing (11),
a connection device (23) mounted to or integrally formed with the first end (29) of the arm structure (21), and configured for connecting the arm structure (21) to the high lift body (15), and
a hinge device (25) mounted to or integrally formed with the second end (31) of the arm structure (21), and configured for pivotably connecting the arm structure (21) to the main wing (11),
**characterized in that**
the arm structure (21) comprises a first arm member (35) and a second arm member (37) formed separately from one another,
each of the first arm member (35) and the second arm member (37) is mounted to or integrally formed with both the connection device (23) and the hinge device (25), so that each of the first arm member (35) and the second arm member (37) forms an individual main load path.

2. The hinge arm device (17) according to claim 1, wherein the first arm member (35) is connected to the second arm member (37) along a longitudinal axis (27) of the arm structure (21).

3. The hinge arm device (17) according to claim 1 or 2, wherein the connection device (23) comprises a first lug (43) and a second lug (45),
wherein the first lug (43) is configured to be directly connected to the high lift body (15), and
wherein the second lug (45) is configured to be connected to the high lift body (15) via a link (47) spaced apart from the first lug (43), so that relative rotation of the high lift body (15) and the hinge arm device (17) is inhibited by the link (47).

4. The hinge arm device (17) according to any of claims 1 to 3, wherein the hinge device (25) comprises a hinge lug (51) configured for a hinged connection to the main wing (11).

5. The hinge arm device (17) according to any of claims 1 to 4, wherein the first arm member (35) has a cross section including a first upper flange portion (57), a first lower flange portion (59) and a first web portion (61) connecting the first upper and lower flange portions (57, 59).

6. The hinge arm device (17) according to claim 5, wherein the second arm member (37) has a cross section including a second upper flange portion (63), a second lower flange portion (65) and a second web portion (67) connecting the second upper and lower flange portions (63, 65).

7. The hinge arm device (17) according to claim 6, wherein the first arm member (35) and the second arm member (37) have a C-shaped cross section, and
wherein the first web portion (61) rests against the second web portion (67).

8. The hinge arm device (17) according to any of claims 1 to 7, wherein the arm structure (21) comprises a third arm member (73) that is formed separately from the first arm member (35) and the second arm member (37) and that is mounted to or integrally formed with both the connection device (23) and the hinge device (25), so that the third arm member (73) forms an individual main load path, and
wherein the third arm member (73) is connected to the first arm member (35) and/or to the second arm member (35) along the longitudinal axis (27) of the arm structure (21).

9. The hinge arm device (17) according to claim 8 when dependent from claim 6, wherein the first arm member (35) and the second arm member (37) have a C-shaped cross section, and
wherein the first web portion (61) and the second web portion (67) rest against the third arm member (73) from opposite sides, so that the first arm member (35) and the second arm member (37) are connected to one another via the third arm member (73).

10. The hinge arm device (17) according to claim 5, wherein the second arm member (37) rests against an upper surface of the first upper flange portion (57) or against a lower surface of the first lower flange portion (59).

11. The hinge arm device (17) according to claim 8 when dependent from claim 5, wherein the first arm member (35) has an I-shaped cross section or a double T-shaped cross section, and
wherein the second arm member (37) rests against a first side of the first web portion (61), and/or
wherein the third arm member (73) rests against a second side (87) of the first web portion (61) opposite the first side (85).

12. The hinge arm device (17) according to any of claims 1 to 4, wherein the first arm member (35) has a cross section including a first web portion (61) and a first flange portion (89) arranged at the upper or lower end of the first web portion (61), and
wherein the second arm member (37) rests against a first side (85) of the first web portion (61) at the respective lower or upper end of the first web portion (61) opposite from the first flange portion (89), and/or
wherein the third arm member (73) rests against a second side (87) of the first web portion (61) at the respective lower or upper end of the first web portion (61) opposite from the first flange portion (89).

13. A high lift assembly (13) comprising
a high lift body (15), and
the hinge arm device (17) according to any of claims 1 to 12,
wherein the high lift body (15) is connected to the connection device (23).

14. A wing (5) for an aircraft (1), comprising
the high lift assembly (13) according to claim 13, and
a main wing (11),
wherein the hinge device (25) is connected to the main wing (11), such that the high lift body (15) is pivotable relative to the main wing (11) by the hinge arm device (17) between a retracted position and a stowed position.

15. An aircraft (1) comprising the hinge arm device (17) according to any of claims 1 to 12, the high lift assembly (13) according to claim 13, and/or the wing (5) according to claim 14.
